Europäisches Patentamt

European Patent Office

Office européen des brevets

(19)

(11) Numéro de publication: **0 159 209**
**B1**

(12) **FASCICULE DE BREVET EUROPEEN**

(45) Date de publication du fascicule du brevet:
24.05.89

(51) Int. Cl.⁴: **A 01 N 1/02**

(21) Numéro de dépôt: **85400319.1**

(22) Date de dépôt: **21.02.85**

(54) Conteneur d'urgence pour membre amputé accidentellement.

(30) Priorité: **24.02.84 FR 8402822**
**13.11.84 FR 8417309**

(43) Date de publication de la demande:
**23.10.85 Bulletin 85/43**

(45) Mention de la délivrance du brevet:
**24.05.89 Bulletin 89/21**

(84) Etats contractants désignés:
**AT BE CH DE FR GB IT LI LU NL SE**

(56) Documents cités:
**DE-A- 2 949 909**
**FR-A- 2 497 934**
**US-A- 3 810 367**

(73) Titulaire: **Hales, Patrick, 25 allée de la Fontaine au Blanc,
F-78860 St. Nom la Breteche (FR)**
Titulaire: **Laurier, Jean-Pierre, Le Moulin de la Bonde,
F-78121 Crespieres (FR)**
Titulaire: **Pradet, Gérard, 5 rue des Gate-Ceps,
F-92210 St. Cloud (FR)**

(72) Inventeur: **Hales, Patrick, 25 allée de la Fontaine au
Blanc, F-78860 St. Nom la Breteche (FR)**
Inventeur: **Laurier, Jean-Pierre, Le Moulin de la Bonde,
F-78121 Crespieres (FR)**
Inventeur: **Pradet, Gérard, 5 rue des Gate-Ceps,
F-92210 St. Cloud (FR)**

(74) Mandataire: **Pinguet, André, CAPRI 28 bis, avenue
Mozart, F-75016 Paris (FR)**

## Description

La présente invention a pour objet un conteneur d'urgence pour membre amputé accidentellement, en vue de sa conservation pendant le transport d'urgence vers un centre adapté à sa replantation.

La conservation physiologique de membres amputés est indispensable au succès d'une tentative de replantation microchirurgicale.

- A température ambiante, le délai maximum est de trois heures.

- Avec un refroidissement entre 2 et 4° dès le moment de l'amputation, le délai peut atteindre 36 heures.

- Il atteint encore 22 heures si le temps d'exposition à température ambiante avant refroidissement n'a pas excédé 2 heures.

Ces temps sont valables pour les fragments de petit dimension (doigt). Ils sont considérablement raccourcis (8 à 12 heures) dès que le volume est plus important (membres) ou que le fragment contient du muscle, et parce qu'un refroidissement homogène est plus difficile à obtenir. Un refroidissement excessif au-dessous de 0° entraîne des lésions de gelure rendant l'échec inéluctable.

Le premier problème, et le plus important qu'il conditionne le succès, est donc celui de la conservation la plus précoce possible par refroidissement, et du transport maintenant les bonnes conditions de conservation jusqu'au centre de replantation.

La méthode utilisée couramment est l'insertion du fragment dans un sac plastique étanche reposant sur de la glace. Cela a plusieurs inconvénients, comme la montre l'expérience des services SOS Mains:

- le refroidissement n'est pas homogène;

- le fragment peut être lésé par contact mécanique direct;

- certaines parties du fragment peuvent être gelées par contact avec la glace ou l'eau glacée si le sac n'est pas étanche, etc.

Il n'y a aucun moyen de savoir avec certitude, au moment de l'intervention, si l'un de ces accidents ne s'est pas produit et ce n'est que l'échec d'une intervention dont on sait a posteriori qu'elle a été inutile et nuisible, qui le fera soupçonner. Il est donc du plus grand intérêt pour le malade et le chirurgien d'avoir la certitude avant l'intervention que la conservation a été faite dans les meilleures conditions.

Divers travaux scientifiques ont montré que pour la meilleure conservation possible:

- le fragment peut ou non être enveloppé dans un tissu imbibé de liquide de Ringer ou de sérum physiologique ou baigner directement dans ces liquides;

- le fragment doit être inséré dans un sac étanche;

- le sac doit être immergé dans de l'eau glacée plutôt que posé sur la glace pour éviter les gelures partielles.

Ceci est très difficile à faire en pratique avec des moyens improvisés et comporte de nombreux risques d'erreur par omission ou excès de zèle.

Le brevet américain 3 810 367 décrit un conteneur pour la réfrigération, le stockage et le transport d'un organe humain en vue de sa transplantation. Ce conteneur comporte une enceinte circulaire ouverte à ses deux extrémités, lesquelles sont hermétiquement bouchables par un couvercle. L'enceinte et les couvercles sont réalisés dans un matériau thermiquement isolant. L'enceinte est divisée en deux compartiments par un cloison rigide étanche. Un des compartiments est prévu pour contenir de l'eau et des glaçons, l'autre un récipient rigide fermé par un couvercle, où l'organe à conserver peut être enclos hermétiquement. Ce conteneur présente l'inconvénient d'avoir une structure relativement complexe, et en particulier de présenter de nombreuses zones d'étanchéité. Il exclut la possibilité d'un refroidissement direct du récipient, qui doit toujours se faire par l'intermédiaire de la cloison. Il nécessite, pour le cas où il faudrait regarnir son compartiment de réfrigération avec des glaçons, d'être retourné cul par dessus tête. Il ne permet pas de vérifier facilement de visu l'état de l'organe à conserver.

Pour toutes ces raisons, il n'est pas adapté au transport et à la conservation de membres amputés accidentellement.

Le brevet allemand 2 949 909 décrit un récipient pour le transport de membres amputés accidentellement devant être conservés au froid en vue de leur implantation. Ce récipient comporte un premier sac souple pour contenir le membre amputé, dont le bord d'extrémité ouverte est muni d'un ourlet où passe une coulisse pour la fermeture dudit axe ainsi qu'un second sac souple pour contenir le premier sac ainsi que des glaçons dont le bord d'extrémité ouverte est muni d'un ourlet où passe une coulisse pour la fermeture dudit sac. Les deux sacs sont assujettis l'un à l'autre par une ligne de couture ou de soudure qui définit leurs fonds respectifs. Le premier sac est plus long que le second sac, de sorte qu'il dépasse sensiblement de l'extrémité ouverture dudit second sac.

Ce récipient présente l'inconvénient de n'être pas isolant, d'être relativement fragile, de ne pouvoir être posé sur son fond, de ne permettre ni la réfrigération du fond du sac intérieur ni la vérification de visu de l'état du membre à conserver. Pour toutes ces raisons, ce récipient n'est pas adapté au transport et à la conservation d'un membre pendant un temps relativement long et dans des conditions difficiles (température extérieure élevée, transport dans un véhicule mal suspendu et/ou sur des routes mauvaises, etc.).

La présente invention a pour objet un conteneur qui puisse être mis en service facilement et rapidement, qui offre une garantie de conservation maximale d'un membre amputé et qui soit de structure simple, donc peu coûteux à fabriquer.

L'invention concerne donc un conteneur d'urgence pour membre amputé accidentellement comprenant un sac souple pour contenir un membre amputé ainsi qu'un récipient pour contenir ledit sac et un liquide de réfrigération pour baigner la paroi extérieure dudit sac caractérisé en ce que le récipient a des parois rigides et thermiquement isolantes, en ce qu'il comporte un couvercle thermiquement isolant percé d'un trou et un bouchon pour obturer ledit trou, en ce que le récipient et le sac sont rendus solidaires par l'intermédiaire du couvercle et en ce que l'ouverture du sac et le trou du couvercle sont obturés simultanément par le bouchon.

Selon une caractéristique de l'invention, l'extrémité ouverte du sac peut être prévue pour s'étendre sur au moins une partie de la hauteur du trou du couvercle. Dans ce cas, le sac peut comporter une portion dont la section coïncide sensiblement avec celle du trou du couvercle, ladite portion de sac étant prévue pour former une garniture d'étanchéité entre le couvercle et le bouchon lorsque celui-ci obture celui-là.

De préférence, le sac souple est en matériau transparent. Ainsi, en soulevant le couvercle, on soulève en même temps le sac et l'on peut en observer le contenu.

Selon une autre caractéristique de l'invention, le conteneur comporte un thermomètre, dont l'information est visible de l'extérieur. Le thermomètre peut être placé sur une paroi latérale du conteneur, ou traverser le couvercle ou même le bouchon, pour s'engager dans le sac souple quand celui-ci est rempli de liquide.

Certaines écoles de chirurgie préfèrent que le membre soit transporté en milieu liquide (liquide de Ringer ou sérum physiologique) tandis que d'autres écoles préfèrent le transport à sec. Dans les deux cas, il apparaît que le sac souple contenant le membre coupé, qu'il y ait ou non du liquide dedans, subit pendant le transport une agitation préjudiciable, et le plus souvent remonte à la surface de l'eau contenue dans le récipient. Le membre coupé se trouve alors au niveau des galçons, ce qui est défavorable, tant du point de vue des chocs que de la température.

C'est pourquoi, selon une autre caractéristique de l'invention, on prévoit de doter le conteneur d'un organe d'extension pour maintenir le sac sensiblement en extension à l'intérieur du récipient lorsque celui-ci contient un liquide. Cet organe d'extension peut être constitué par un arceau en forme de U solidaire du couvercle, le fond du sac étant assusjetti à la partie de l'arceau la plus éloignée du couvercle.

Il est aussi apparu aux inventeurs que pour éviter ou réduire les mouvements de l'eau et des glaçons dans le récipient, celui-ci devait être complètement rempli, au moins au moment du chargement. Si le remplissage est effectué avant la mise en place du sac, il y a le risque, en plaçant celui-ci, d'un débordement, qui risque de laisser de l'eau et des glaçons s'introduire dans le sac souple.

Conformément à la présente invention, il est prévu un deuxième trou dans le couvercle, pour compléter le remplissage, une fois que le couvercle, avec le sac, a été placé, et le sac obturé par le bouchon. Si débordement il y a, l'eau ne s'introduit pas dans le sac puisque celui-ci est fermé par le bouchon.

D'autres caractéristiques apparaîtront au cours de la description qui va suivre, donnée à titre d'exemple non limitatif en regard des dessins ci-joints, et qui fera bien comprendre comment l'invention peut être réalisée.

Sur les dessins:

La figure 1 est une vue en coupe schématique d'un conteneur d'urgence selon l'invention;

La figure 2 est une vue en coupe de détail d'un mode de réalisation de l'invention; et

La figure 3 est une vue en perspective d'un exemple de moyen pour maintenir le fond du sac au fond du récipient; et

La figure 4 est une vue en coupe d'une variante de réalisation du conteneur selon l'invention.

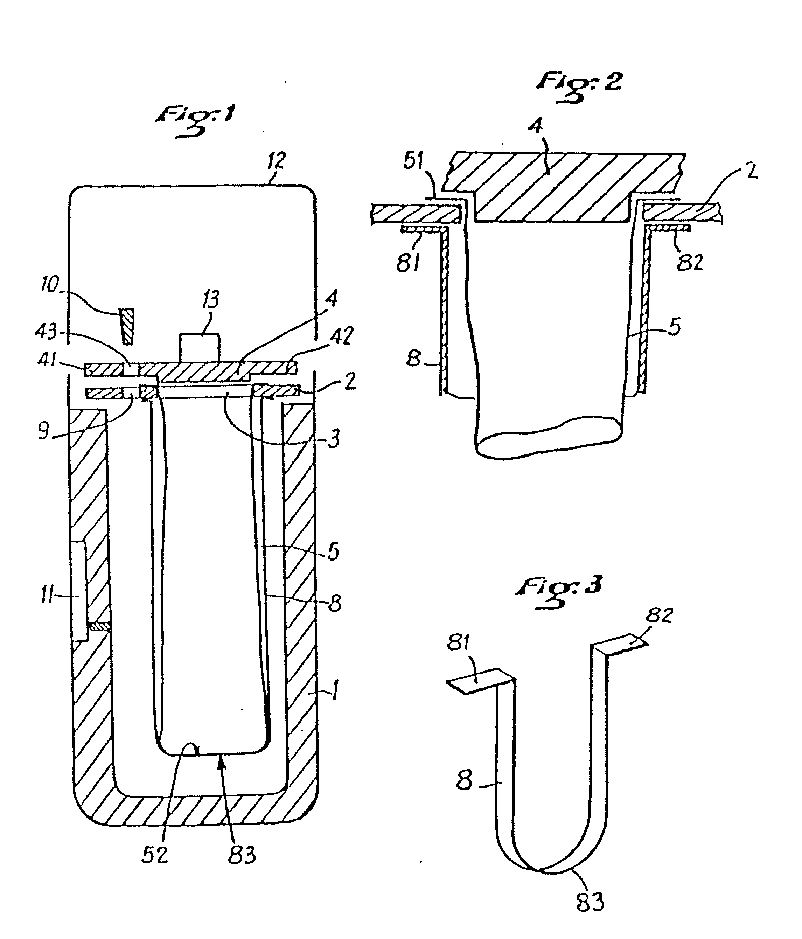

Le récipient 1 représenté sur les figures 1, 2 et 3 peut avoir la forme d'une boîte parallélépipédique ouvert à un bout. Ses parois sont rigides et garnies de matière isolante thermique. Un couvercle 2, également isolant, et formé avec un trou 3 permet de fermer le récipient 1, le trou 3 pouvant être bouché par un bouchon 4. Un sac souple 5 est passé par le trou 3 entre le couvercle 2 et le bouchon 4. Il peut être passé librement dans le trou 3, sans y être fixé. De cette façon, il peut être séparé facilement du récipient et de son couvercle. Mais cet avantage est secondaire par rapport à la conformité des conditions de transport. Comme représenté en coupe sur la figure 2, le bord 51 du sac peut être collé ou thermosoudé sur la section et le bord du trou 3. Il pourrait aussi être simplement collé ou thermosoudé autour du trou 3, sur la face intérieure du couvercle 2. Mais, il est très avantageux d'utiliser le sac lui-même comme garniture d'étanchéité pour l'obturation par le bouchon 4, d'autant plus que c'est aussi le sac lui-même que l'on cherche à obturer de façon étanche.

Por éviter que le sac ne se recroqueville ou se replie, et remonte à la partie supérieure du récipient (celui-ci étant tenu normalement, avec le couvercle en haut), des moyens sont prévus selon l'invention pour maintenir le fond du sac au fond du récipient, ou vers le fond. Dans un exemple de réalisation, ces moyens comprennent un arceau 8, par exemple en matière plastique suffisamment rigide, fixé par ses extrémités 81, 82 au couvercle 2, au voisinage du bord du trou 3. Le fond 52 du sac 5 peut être collé ou thermosoudé sur la courbe formant le sommet 83 de l'arceau 8. Ainsi, à la mise en place du couvercle 2 sur le récipient 1, le sac 5 se place correctement et reste maintenu en position correcte. Si le récipient n'est pas trop secoué pendant le transport, la température de l'eau au fond du récipient peut être légèrement supérieure à 0 °C, ce qui est avantageux pour la conservation de l'organe transporté.

Afin de faciliter un remplissage complet du récipient, il est prévu, conformément à la présente invention, un deuxième trou 9 dans le couvercle 2. Pour remplir le récipient, on place d'abord dedans une certaine quantité d'eau et de glace, puis on place le couvercle 2 avec le sac 5. Ensuite, on obture le trou 3 au moyen du bouchon 4. On peut alors compléter le remplissage du récipient par le trou 9, jusqu'à parvenir au trop plein. Le bouchon 4 obturant le trou 3, il n'y a aucun risque de laisser passer de l'eau dans le sac 5. Le trou 9 est ensuite obturé par le bouchon 10. Dans la forme de réalisation représentée, le bouchon 4 comporte des ailes 41, 42 pour recouvrir le couvercle 2, dans un but esthétique, par exemple. Il est alors prévu un trou 43 dans l'aile 41 du bouchon 4, en regard du trou 9.

Selon une forme de réalisation de l'invention, un thermomètre 11 est placé dans la paroi du récipient pour indiquer à l'extérieur la température qui règne à l'intérieur du récipient. On peut ainsi voir à tout moment la température de l'eau de refroidissement à l'intérieur du récipient. Si la température remonte au-dessus d'une certaine valeur, si par exemple la température de l'eau atteint 4°C, on peut alors ouvrir le bouchon 10, verser une quantité d'eau et introduire à la place des glaçons, et parfaire le remplissage avec de l'eau.

L'ensemble peut être complété par un capuchon 12, qui peut par exemple servir de mesure pour l'eau ou la glace, à charger dans le récipient. Le mode d'emploi est avantageusement inscrit sur une paroi du récipient.

On peut prévoir un bouton, ou une poignée 13 pour manipuler le couvercle.

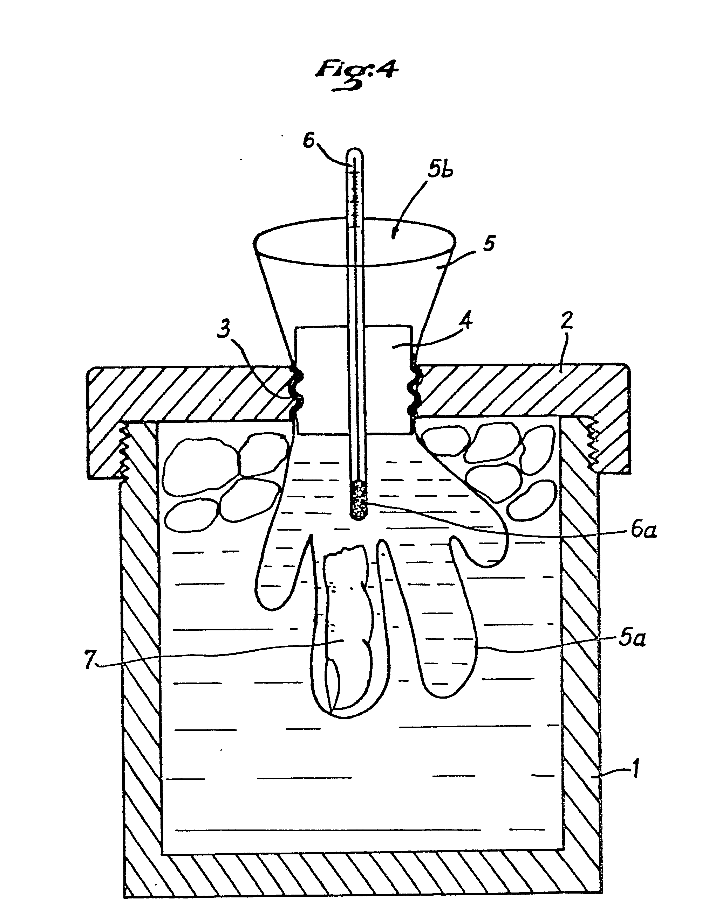

Sur la figure 4, on a représenté une variante de réalisation du conteneur selon l'invention. Sur cette figure, on a utilisé, pour des parties équivalentes, les mêmes chiffres de référence que sur les figures 1 à 3.

Cette variante de réalisation comprend un récipient 1 avec un couvercle 2. Le récipient et le couvercle sont en matière isolante thermique et le couvercle est prévu pour obturer le récipient de façon étanche et isolante, par exemple par vissage, avec interposition d'un joint. Le couvercle peut aussi être articulé sur un bord du récipient et recevoir une serrure adéquate. Le récipient peut être cylindrique ou avoir une section carrée ou polygonale quelconque. L'ouverture occupe de préférence la section entière du récipient, comme dans le premier exemple, pour faciliter l'emploi on le verra ci-après.

Selon une caractéristique avantageuse de l'invention, le couvercle est muni d'un trou 3 obturable par un bouchon 4, qui est placé dans une poche formée par un sac 5 dont une partie fermée 5a doit être placée à l'intérieur du récipient 1, le bouchon pouvant être placé ou enlevé par l'ouverture 5b du sac. Dans l'exemple représenté, le sac souple est rempli de liquide, dans lequel baigne le membre accidenté.

On peut prévoir un thermomètre 6 dont la partie sensible 6a est à l'intérieur du conteneur. Le thermomètre est ici placé à travers le bouchon 4 et indique la température du liquide baignant l'organe transporté. Le thermomètre pourrait aussi traverser le couvercle 2 ou être placé dans la paroi du conteneur.

Dans l'exemple représenté, le sac a une forme permettant de loger un ou plusieurs doigts, ou une main.

Il peut avoir avantageusement la forme d'un gant. On peut envisager des modèles de tailles différentes selon le même principe (doigt, main, pied, membres).

Pour utiliser le conteneur selon l'invention, on place le membre coupé, par exemple un doigt 7 dans le sac 5, que l'on remplit avec un liquide approprié, par exemple du sérum physiologique ou du liquide de Ringer. Dans ce but, le conteneur est stocké avec une dose de liquide adéquate, placée dans une bouteille ou une dose en plastique. On place le sac dans le trou 3 du couvercle 2, on met ensuite le bouchon 4. Le récipient est alors rempli d'eau avec des glaçons. Le liquide du récipient se met alors à une température de 0°C et y reste jusqu'à ce que les glaçons soient tous fondus. Si la conservation doit être prolongée, on ajoute des glaçons, aussi souvent que nécessaire. Avec un récipient bien isolant, l'addition de glaçons et l'enlèvement d'eau sont faits pour plusieurs heures. On y procède en dévissant le couvercle 2 du récipient 1. Ce faisant, on peut observer le fragment 7 dans sa poche, car avantageusement cette poche 5 est réalisée en plastique transparent.

Le liquide dans le récipient 1 étant à 0°C, le liquide dans le sac 5 ne risque pas de geler. On peut prévoir un bouchon 4 moins isolant que la paroi du récipient 1 et du couvercle 2, pour assurer une température légèrement supérieure à 0° dans le sac 5.

Enfin, sur les parois externes du récipient 1, on peut avantageusement imprimer:
— le mode d'emploi — délai de renouvellement;
— les précautions à prendre vis-à-vis du fragment;
— les instructions concernant le blessé;
— l'adresse de tous les centres de la confédération européenne des services Urgences Mains.

Il s'agit donc d'une glacière physiologique que les aménagements proposés rendent apte au transport et à la conservation physiologique spécifique de doigts ou de membres amputés en vue de leur replantation chirurgicale en centres spécialisés dans les meilleures conditions.

Un tel récipient contenant à l'intérieur le sac transparent et si on le désire une dose de liquide de Ringer, sera conservé sur un lieu possible d'accident (usine, artisanat, école, armée, etc.). Il permet le transport à longue distance avec un délai accru (30 à 37 heures) dans les meilleures conditions.

**Revendications**

1. Conteneur d'urgence pour membre amputé accidentellement comprenant un sac souple pour contenir un membre amputé ainsi qu'un récipient pour contenir ledit sac et un liquide de réfrigération pour baigner la paroi extérieure dudit sac, caractérisé en ce que le récipient (1) a des parois rigides et thermiquement isolantes, en ce qu'il comporte un couvercle (2) thermiquement isolant percé d'un trou (3) et un bouchon (4) pour obturer ledit trou, en ce que le récipient (1) et le sac (5) sont rendus solidaires par l'intermédiaire du couvercle (2) et en ce que l'ouverture du sac (5) et le trou (3) sont obturés simultanément par le bouchon (4).

2. Conteneur d'urgence selon la revendication 1, caractérisé en ce que l'extrémité ouverte du sac (5) est prévue pour s'étendre sur au moins une partie de la hauteur du trou (3).

3. Conteneur d'urgence selon la revendication 2, caractérisé en ce que le sac (5) comporte une portion dont la section coïncide sensiblement avec celle du trou (3), ladite portion de sac étant prévue pour former une garniture d'étanchéité entre le couvercle (2) et le bouchon (4) lorsque celui-ci obture celui-là.

4. Conteneur d'urgence selon une des revendications précédentes, caractérisé en ce qu'il comporte un organe d'extension (8) pour maintenir le sac (5) sensiblement en extension à l'intérieur du récipient (1) lorsque celui-ci contient un liquide.

5. Conteneur d'urgence selon la revendication 4, caractérisé en ce que l'organe d'extension est constitué par un arceau (8) en forme de U solidaire du couvercle (2), le fond du sac (5) étant assujetti à la partie de l'arceau (8) la plus éloignée du couvercle (2).

6. Conteneur d'urgence selon une des revendications précédentes, caractérisé en ce que le sac (5) est réalisé dans un matériau transparent.

7. Conteneur d'urgence selon une des revendications précédentes, caractérisé en ce que le couvercle (2) comporte en outre un trou de remplissage (9).

8. Conteneur d'urgence selon une des revendications précédentes, caractérisé en ce qu'il comporte un thermomètre (6) assujetti au bouchon (4) pour capter la température régnant dans le sac (5).

9. Conteneur d'urgence selon une des revendications précédentes, caractérisé en ce qu'il comporte un thermomètre (11) incorporé dans la paroi du récipient (1) pour capter la température du liquide de réfrigération.

10. Conteneur d'urgence selon une des revendications précédentes, caractérisé en ce que le sac souple a une forme physiologique telle qu'un gant.

11. Conteneur d'urgence selon une des revendications précédentes, caractérisé en ce qu'il comporte en outre une dose de liquide adapté à conserver un membre amputé.

## Claims

1. An emergency container for an accidentally amputated member, the container comprising a flexible bag for containing an amputated member and a receptacle for containing said bag and a cooling liquid for wetting the outer wall of said bag, characterised in that the receptacle (1) has walls which are rigid and thermally insulating, in that it comprises a thermally insulating cover (2) bored with a hole (3), and a stopper (4) for closing said hole, in that said receptacle (1) and bag (5) are made unitary by means of cover (2) and in that the opening of bag (5) and hole (3) are simultaneously closed by stopper (4).

2. An emergency container according to claim 1, characterised in that the open end of bag (5) is provided for extending along at least a portion of hole (3) height.

3. An emergency container according to claim 2, characterised in that the bag (5) comprises a portion the section of which coincides substantially with the section of hole (3), said bag portion being provided for forming a tightness lining between cover (2) and stopper (4) when said stopper closes said cover.

4. An emergency container according to any one of preceding claims, characterised in that it comprises an extending means (8) for maintaining said bag (5) substantially extended inside receptacle (1) when this last is filled with a liquid.

5. An emergency container according to claim 4, characterised in that said extending means is made of a shaped hoop (8), unitary with cover (2), the bottom of bag (5) being affixed to the hoop (8) portion which is the most distant from cover (2).

6. An emergency container according to any one of preceding claims, characterised in that bag (5) is made of transparent material.

7. An emergency container according to any one of preceding claims, characterised in that cover (2) is formed with a hole (9) for filling the receptacle.

8. An emergency container according to any one of preceding claims, characterised in that it comprises a thermometer (6) affixed to stopper (4) for sensing the temperature in bag (5).

9. An emergency container according to any one of preceding claims, characterised in that it comprises a thermometer (11) included in receptacle (1) wall for sensing the temperature of the cooling liquid.

10. An emergency container according to any one of preceding claims, characterised in that said flexible bag has a physiological shape such as that of a glove.

11. An emergency container according to any one of preceding claims, characterised in that further including a dose of liquid suitable for conserving a severed member.

## Patentansprüche

1. Notcontainer für bei Unfällen abgetrennte Gliedmaßen mit einem elastischen Sack zur Aufnahme eines abgetrennten Gliedes sowie mit einem Behälter, der den Sack und eine Kühlflüssigkeit enthält, mit der die Außenwand des Sacks umspült wird, dadurch gekennzeichnet, der Behälter (1) starre und wärmeisolierende Wände hat, daß er einen wärmeisolierenden Deckel (2) mit einem Loch (3) und einem Stopfen (4) zum Verschließen des Lochs aufweist, daß der Behälter (1) und der Sack (5) über den Deckel (2) fest miteinander verbunden werden und daß die Öffnung des Sacks (5) und das Loch (3) gleichzeitig vom Stopfen (4) verschlossen werden.

2. Notcontainer nach Anspruch 1, dadurch gekennzeichnet, daß das offene Ende des Sacks (5) so ausgebildet ist, daß es sich über mindestens einen Teil der Höhe des Lochs (3) erstreckt.

3. Notcontainer nach Anspruch 2, dadurch gekennzeichnet, daß der Sack (5) einen Bereich aufweist, dessen Querschnitt im wesentlichen dem des Lochs (3) entspricht, wobei dieser Bereich des Sacks so ausgebildet ist, daß er eine Dichtung zwischen dem Deckel (2) und dem Stopfen (4) bildet, wenn der eine den anderen verschließt.

4. Notcontainer nach einem der vorhergehenden Ansprüche, dadurch gekennzeichnet, daß er ein Dehnungsorgan (8) aufweist, um den Sack (5) im wesentlichen ausgedehnt im Inneren des Behälters (1) zu halten, wenn dieser eine Flüssigkeit enthält.

5. Notcontainer nach Anspruch 4, dadurch gekennzeichnet, daß das Ausdehnungsorgan aus einem U-förmigen Bügel (8) besteht, der fest mit dem Deckel (2) verbunden ist, wobei der Boden des Sacks (5) an dem Teil des Bügels (8) befestigt ist, der am weitesten vom Deckel (2) entfernt liegt.

6. Notcontainer nach einem der vorhergehenden Ansprüche, dadurch gekennzeichnet, daß der Sack aus einem transparenten Material besteht.

7. Notcontainer nach einem der vorhergehenden Ansprüche, dadurch gekennzeichnet, daß der Deckel (2) außerdem ein Fülloch (9) aufweist.

8. Notcontainer nach einem der vorhergehenden Ansprüche, dadurch gekennzeichnet, daß er ein Thermometer (6) enthält, das fest am Stopfen (4) befestigt ist, um die im Sack (5) herrschende Temperatur zu messen.

9. Notcontainer nach einem der vorhergehenden Ansprüche, dadurch gekennzeichnet, daß er ein Thermometer (11) enthält, das in die Wand des Behälters (1) eingearbeitet ist, um die Temperatur der Kühlflüssigkeit zu messen.

10. Notcontainer nach einem der vorhergehenden Ansprüche, dadurch gekennzeichnet, daß der elastische Sack eine physiologische Form wie die eines Handschuhs hat.

11. Notcontainer nach einem der vorhergehenden Ansprüche, dadurch gekennzeichnet, daß er weiter eine Flüssigkeitsdosis aufweist, die ein abgetrenntes Glied konservieren kann.

*Fig.1*

*Fig.2*

*Fig.3*

## Fig.4